(19) **Europäisches Patentamt**

**European Patent Office**

**Office européen des brevets**

(11) **EP 0 820 157 B1**

(12) **FASCICULE DE BREVET EUROPEEN**

(45) Date de publication et mention
de la délivrance du brevet:
**20.10.2004 Bulletin 2004/43**

(51) Int Cl.⁷: **H04B 1/707**

(21) Numéro de dépôt: **97401680.0**

(22) Date de dépôt: **11.07.1997**

(54) **Procédé de démodulation différentielle numérique**

Verfahren zur digitalen Differenzialdemodulation

Method for digital differential demodulation

(84) Etats contractants désignés:
**DE GB**

(30) Priorité: **16.07.1996 FR 9608866**

(43) Date de publication de la demande:
**21.01.1998 Bulletin 1998/04**

(73) Titulaire: **FRANCE TELECOM**
**75015 Paris (FR)**

(72) Inventeurs:
• **Duponteil, Daniel**
**92170 Vanves (FR)**

• **Yuan-Wu, Julie**
**788000 Versailles (FR)**

(74) Mandataire: **Poulin, Gérard et al**
**BREVALEX**
**3, rue du docteur Lancereaux**
**75008 Paris (FR)**

(56) Documents cités:
**WO-A-91/15912**    **GB-A- 2 233 860**
**US-A- 4 969 159**    **US-A- 5 506 862**

## Description

### Domaine technique

La présente invention a pour objet un procédé de démodulation différentielle numérique. Elle trouve une application dans les systèmes de transmission dits à accès multiple à répartition par les codes, ou AMRC en abrégé. Une telle technique est utilisée dans les systèmes radiomobiles.

### Etat de la technique antérieure

L'exposé de l'état de la technique qui va suivre renvoie à huit documents dont les références sont données en fin de description.

L'accès multiple à répartition par les codes, en tant que technique de partage du canal radioélectrique, est souvent envisagé comme base de définition des futurs systèmes radiomobiles de troisième génération. Elle est également utilisée dans certains systèmes actuels de télécommunications avec les mobiles terrestres ou par satellites [1]. Elle permet l'occupation simultanée d'un même canal radio par les signaux émis par plusieurs ou vers plusieurs terminaux mobiles. Ce type de cohabitation propre à l'AMRC n'est rendu possible que grâce à l'emploi d'une modulation à étalement de spectre.

Dans la modulation à étalement de spectre, le signal émis occupe une bande de fréquence beaucoup plus large que la bande nécessaire à une transmission utilisant une modulation classique[6]. Deux méthodes d'étalement existent : l'étalement par saut de fréquence et l'étalement par séquence directe [6]. Le facteur d'étalement, qui est le rapport de la bande occupée au débit d'information transmis, est un paramètre important. Dans le système cité en référence[1], il est de 128.

La technique de modulation à étalement de spectre constitue une technique d'accès particulièrement souple. Il est en effet possible de transmettre des signaux simultanément dans la même bande fréquence sans aucune coordination. En outre, dans le domaine radiomobile, l'AMRC suscite un intérêt tout particulier dans la mesure où il offre l'opportunité d'un traitement original des trajets multiples engendrés par la propagation.

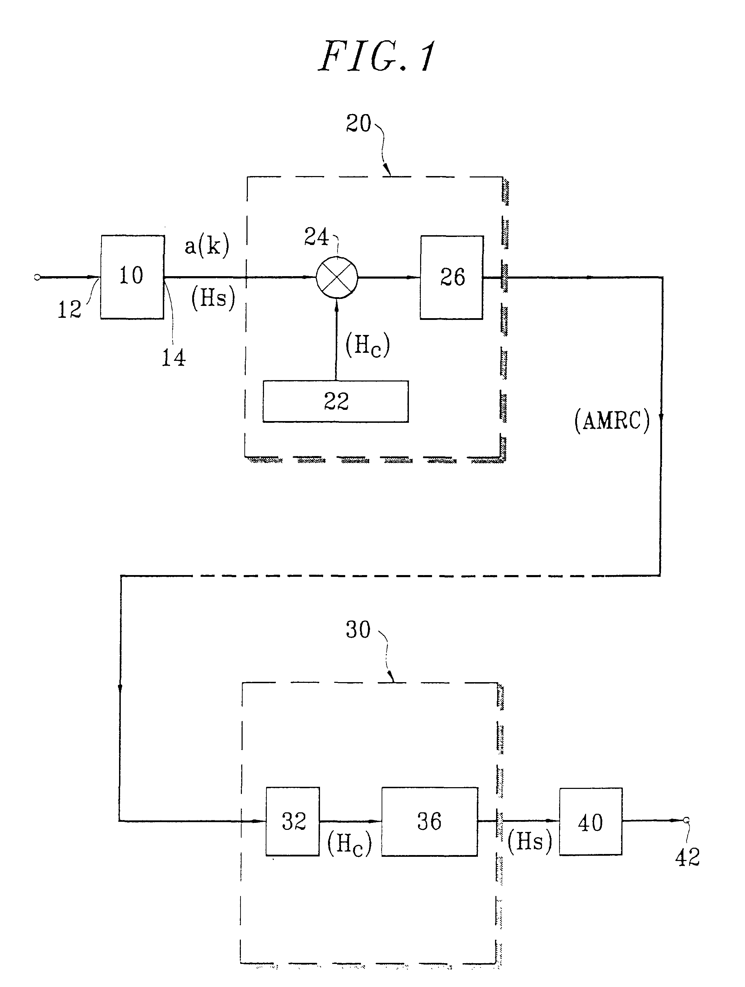

Le schéma de principe de la modulation et de la démodulation AMRC est illustré sur la figure 1 annexée. Ce schéma de principe est volontairement simplifié, n'y figurent pas notamment les étages RF (radiofréquence) qui permettent, à l'émission, de transposer et d'émettre le signal dans la bande de fréquence allouée, et à la réception, de récupérer le signal dans la bande de fréquence allouée et de le transposer en bande de base où il sera traité. Sur cette figure, on voit, d'une part, un circuit d'étalement de spectre 20 utilisé à l'émission et, d'autre part, un circuit de filtrage adapté 30, utilisé à la réception. Le circuit d'étalement de spectre 20 utilisé à l'émission reçoit des informations constituées par une suite de symboles binaires notés a(k), où k est un indice marquant le rang du symbole. Ces symboles peuvent être reçus directement d'une source d'informations, où, comme illustré sur la figure 1, d'un circuit de codage correcteur 10, qui reçoit l'information brute sur son entrée 12 et délivre l'information protégée sur sa sortie 14. La fréquence des symboles d'information est notée Hs.

Le circuit d'étalement de spectre 20 comprend d'abord un générateur de séquence d'étalement 22. Cette séquence est formée d'une suite d'éléments binaires appelés "chips". Cette séquence est généralement pseudo-aléatoire. La fréquence des chips est notée Hc. Elle est N fois plus grande que la fréquence Hs des symboles d'information (Hc=NHs). Autrement dit, la période des chips, notée Tc, est N fois plus petite que la période des symboles (Tc=Ts/N). Les chips sont notés $\alpha(n)$, où n désigne le rang du chip dans la séquence. Ce rang court de 0 à N-1 pour une même séquence.

Chaque symbole d'information a(k) est multiplié par tous les chips de la séquence $\alpha(n)$ dans un multiplieur 24. A la sortie de ce multiplieur, on trouve donc un signal constitué de N impulsions de largeur Tc. Avec les notations précédentes, la suite de ces signaux peut être notée :

...........................a(k-1).$\alpha$(N-1), a(k).$\alpha$(0), a(k).$\alpha$(1), a(k).$\alpha$(2), ..., a(k).$\alpha$(N-1), a(k+1).$\alpha$(0), ...

Un tel signal a un débit, exprimé en chips par seconde, N fois plus grand que le débit en symboles d'information. Le spectre a donc bien été étalé dans un rapport N.

Le circuit d'étalement 20 se complète par un filtre 26 qui est du type filtre passe-bas.

L'émetteur complet comprend encore d'autres moyens qui n'ont pas été représentés parce qu'ils sont bien connus de l'homme de l'art, comme par exemple un oscillateur local pour engendrer une porteuse, un circuit de modulation de cette porteuse, une antenne d'émission, etc...

Côté réception, le circuit 30 comprend, tout d'abord, un filtre passe-bas 32, analogue au filtre 26 utilisé à l'émission, et un filtre 36 adapté à la séquence d'étalement utilisée à l'émission. Plus précisément, la réponse impulsionnelle du filtre du récepteur est la renversée dans le temps de la séquence pseudo-aléatoire utilisée dans l'émetteur. En d'autres termes, le filtre adapté 36 effectue une opération de convolution sur le signal délivré par le premier filtre 32. Le débit des impulsions à l'entrée du filtre adapté 36 réalisant la convolution est égal au débit Hc des chips, mais, après convolution, ce débit tombe à Hc/N soit Hs.

Un circuit 40 décide de la valeur de l'information reçue en fonction de la valeur du signal de convolution. L'information est alors restituée sur la sortie générale 42.

Dans un tel système, les informations transmises peuvent être des informations binaires ordinaires, mais elles sont le plus souvent des informations résultant d'une opération préalable dite de codage différentielle. Dans ce cas, les symboles a(k) sont obtenus par un codeur différentiel préliminaire, composé, par exemple, d'une porte logique de type OU exclusif et d'un circuit à retard, la porte combinant un bit courant avec le bit qui précède. Les symboles ainsi codés sont ensuite multipliés par la séquence pseudo-aléatoire dont il a été question.

Quant à la modulation de la porteuse, elle peut être de tout type connu, mais on préfère souvent utiliser une modulation de phase, notamment la modulation de phase à deux états, dite MDP2. Dans le récepteur, il suffit de comparer la phase du symbole en cours avec la phase du symbole précédent. Le récepteur n'a donc pas à estimer la phase des symboles, mais seulement la différence de phase entre deux symboles successifs. D'où le caractère "différentiel" du procédé.

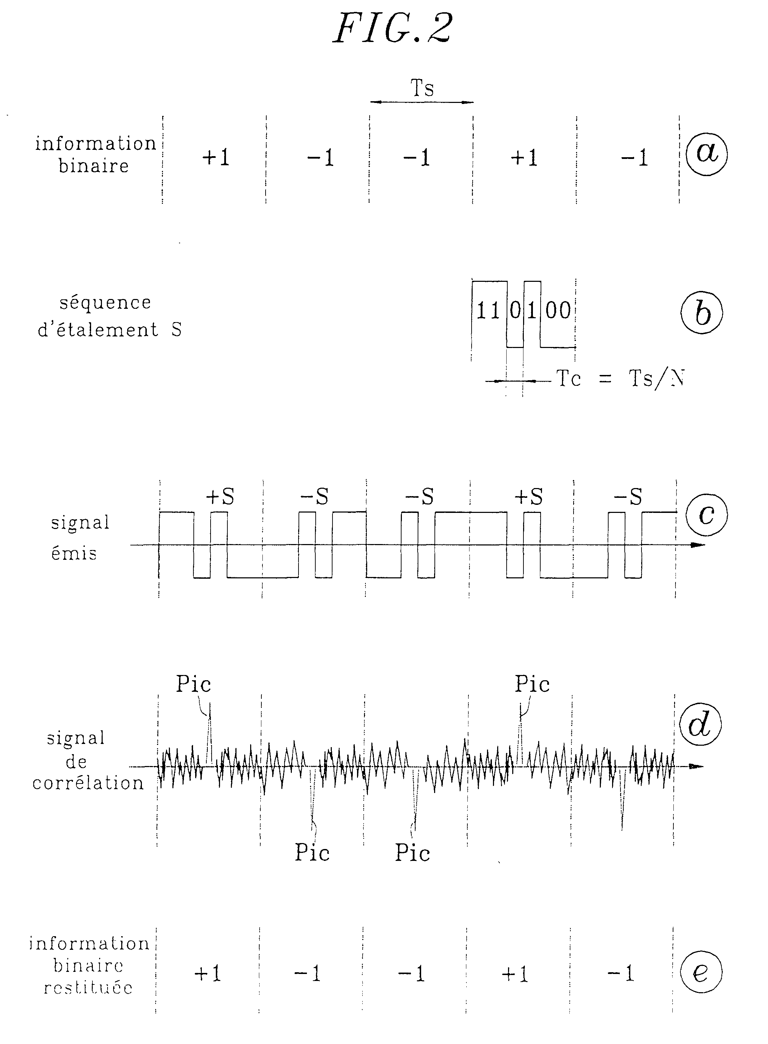

La figure 2 permet d'illustrer le fonctionnement du système en représentant schématiquement quelques signaux apparaissant dans la chaîne.

L'information binaire est représentée sur la ligne (a). Il s'agit d'une suite de symboles binaires de période Ts, en l'occurrence la suite +1, -1, -1, +1, -1. La ligne (b) illustre la séquence d'étalement S formée de N chips, en l'occurrence 110100 (naturellement, en pratique, le nombre N est bien supérieur à 6). La ligne (c) montre le résultat de la multiplication du signal d'information de la ligne (a) par la séquence S de la ligne (b). On obtient une suite de motifs +S, -S, -S, +S, -S. Le signal de corrélation délivré par le filtre à la séquence d'étalement est représenté sur la ligne (d). Apparaissent, dans un fond de bruit, des pics de corrélation dont le signe permet de retrouver les motifs +S et -S. Une décision peut alors être prise pour restituer l'information d'origine (ligne e).

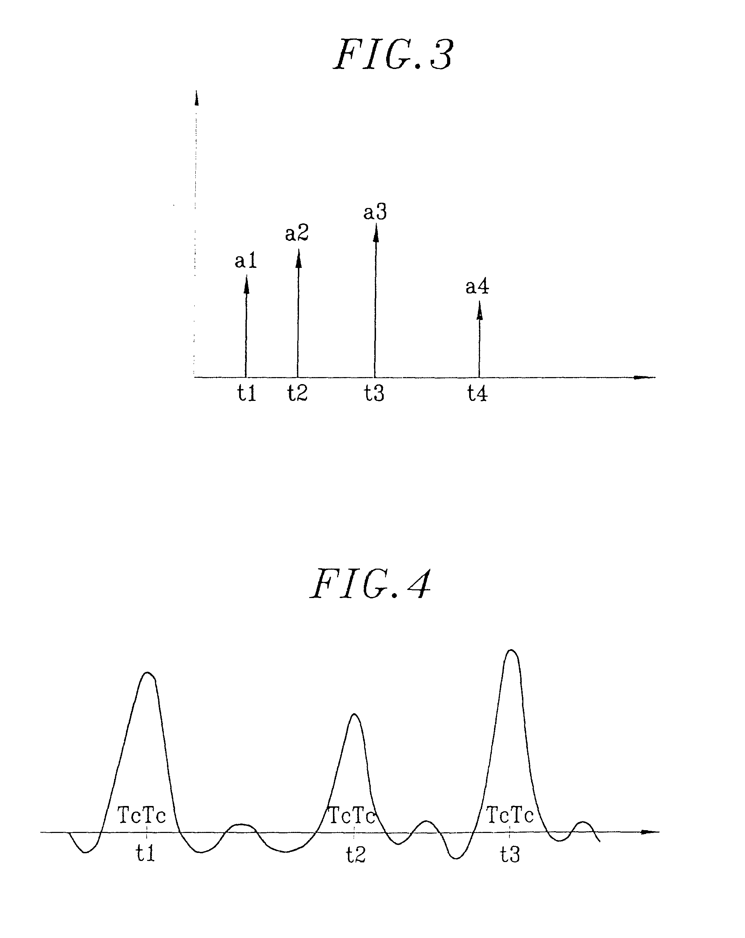

Les schémas de la figure 2 sont, en fait, assez théoriques car, dans la réalité, le signal radioélectrique se propage de manière complexe entre l'émetteur et le récepteur en suivant plusieurs trajets différents [2],[3],[8]. Le signal reçu se présente au récepteur à des instants décalés. La réponse impulsionnelle d'un canal radiomobile ne se présente donc pas sous forme d'un pic localisé dans le temps, mais plutôt sous forme d'une série de raies d'amplitudes diverses, comme représenté sur la figure 3 annexée. On voit ainsi, sur cette figure, quatre réponses différentes situées aux instants t1, t2, t3 et t4, avec quatre amplitudes différentes a1, a2, a3 et a4.

La réception optimale consiste alors à reconnaître, dans le signal reçu, les motifs :

$$a1S(t-t1)+a2S(t-t2)+a3S(t-t3)+a4S(t-t4)$$

Pratiquement, cela veut dire que le récepteur effectue la corrélation glissante avec la séquence S et doit recombiner les différents pics obtenus pour chacun des trajets existants. Comme il existe un problème dans l'estimation des trajets, c'est-à-dire dans la connaissance des paramètres (a1,t1), ..., (a4,t4), on peut se servir d'un signal pilote (signal spécifique), comme par exemple dans les systèmes Qualcomm, [1], et Globalstar.

Le récepteur optimal de la figure 1 est alors complété par un filtrage adapté à la réponse impulsionnelle h(t) du canal. D'un point de vue mathématique, le filtrage adapté à la réponse impulsionnelle du canal réalise une recombinaison de tous les trajets existant. Cette opération est partiellement réalisée dans les récepteurs en râteau classique, ("Rake Receiver"), [1],[3], qui combinent un nombre limité de trajets.

Le filtrage adapté à l'impulsion reçue se faisant au débit des chips, pour que le récepteur atteigne la meilleure performance possible avec un canal de transmission donné, il faut que ce débit soit assez élevé. Par exemple, avec le canal urbain de type GSM-TU, [8], les trajets existants ne peuvent être tous pris en compte qu'avec un débit chip supérieur à 5 Mchips/s.

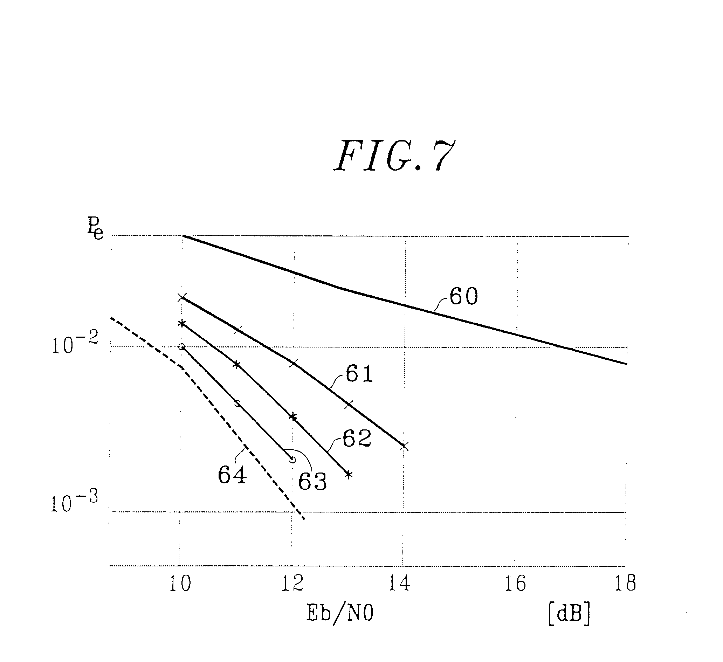

La modulation à étalement de spectre est justement une technique qui permet de discriminer les différents trajets constituant le canal de transmission. La recombinaison de ces trajets procure des gains de performance très appréciables par rapport à une transmission qui aurait subi un canal ordinaire (dit de Rayleigh) comme on le verra plus loin à propos de la figure 7.

Bien que donnant satisfaction à certains égards, toutes ces techniques ne sont pas pour autant dénuées d'inconvénients. En particulier, elles sont très complexes de mise en oeuvre. Par exemple, dans le système Qualcomm, norme IS-95, il existe un démodulateur par trajet reçu. La norme préconise de mettre en oeuvre cinq démodulateurs, trois pour démoduler les principaux trajets et deux supplémentaires pour gérer l'existence des trajets, notamment leurs apparitions et disparitions. Le débit de transmission de chips de 1 Mbit/s est d'ailleurs adapté à ce nombre de démodulateurs. Avec des débits de chips beaucoup plus importants, nécessaires pour transmettre des services à débits plus élevés, le nombre potentiel de trajets que le récepteur pourra discriminer peut être très grand.

Le but de l'invention est justement de remédier à ces inconvénients.

## Exposé de l'invention

A cette fin, l'invention propose un procédé de démodulation dont l'une des caractéristiques essentielles est de mettre en oeuvre un échantillonnage asynchrone de fréquence double de la fréquence chips, c'est-à-dire à la fréquence 2Hc. En effet, et comme le montrait la figure 3, une réception optimale classique nécessite que l'on combine des échantillons pris exactement aux instants t1, t2, t3, ... Mais, comme on le comprendra mieux par la suite, un échantillonnage asynchrone au rythme des chips, c'est-à-dire à la fréquence Hc, peut conduire à rater un, deux, voire tous les trajets reçus, si les instants d'échantillonnage ne coïncident pas exactement avec les instants t1, t2, t3, ...

Selon la présente invention, on met en oeuvre un échantillonnage asynchrone au rythme double, c'est-à-dire à deux fois la fréquence des chips (2Hc). Si l'on n'échantillonne pas à l'instant optimal t1, t2 ou t3, on dispose tout de même de deux échantillons du même trajet et l'on ne peut plus rater aucun trajet. Les inventeurs ont vérifié que, pratiquement, la recombinaison de ces échantillons apporte la même information que l'échantillon pris à l'instant optimal, et ceci bien que les échantillons de bruit correspondants soient corrélés. Cette propriété ne se vérifie plus pour un nombre d'échantillons supérieur. En effet, avec un nombre plus grand d'échantillons, on constate que les performances se dégradent.

Pour chaque symbole de rang k, au lieu d'obtenir N échantillons Z(k,i) avec i allant de 1 à N, on en obtient donc, selon l'invention, 2N. Autrement dit, l'indice i de 1 à 2N. La démodulation effectuée est encore de type différentiel. Elle est qualifiée d'intégrale par les inventeurs, en ce sens qu'elle tient compte de tous les trajets significatifs reçus. Selon l'invention, on calcule, pour chaque indice i, le produit d'un échantillon Z(k,i), par l'échantillon précédent conjugué, soit Z*(k-1,i) et l'on fait la somme de ces produits sur les 2N échantillons disponibles. Comme les échantillons sont, en fait, des quantités complexes, on calcule la partie réelle de cette somme, soit la quantité :

$$\text{Réelle}\left\{\sum_{i=1}^{2N} Z(k,i).Z^*(k-1,i)\right\} \equiv U(k,i)$$

Cette quantité U(k,i) sert à prendre la décision sur la valeur binaire de l'information reçue. Cette décision est prise en comparant la quantité obtenue à un seuil de valeur nulle, comme il est d'usage en MDP2. Cette quantité peut être aussi conservée sous forme analogique pour un éventuel traitement de protection contre les erreurs de transmission.

En l'absence de toute indication sur la réponse impulsionnelle du canal, c'est-à-dire sur l'étalement et l'amplitude des trajets, il est toutefois possible de se limiter à une fenêtre temporelle plus étroite que la durée d'un symbole transmis. En effet, chaque environnement possède ses caractéristiques de propagation propres. Par exemple, l'étalement des trajets dans les grandes cellules en environnement urbain peut atteindre 5 microsecondes, alors qu'à l'intérieur des bâtiments, il est de l'ordre de quelques dixièmes de microsecondes, [4]. Lors de la mise en place d'un réseau radiomobile, les conditions de propagation font l'objet de mesures précises et la valeur de ce paramètre significatif est bien connue. En conséquence, on limitera le calcul de la grandeur de décision à un intervalle de durée égale à la durée d'étalement correspondant aux conditions d'utilisation du réseau mobile. La démodulation intégrale est alors fondée sur le calcul de la quantité :

$$\text{Réelle}\left\{\sum_{i=M}^{i=P} Z(k,i).Z^*(k-1,i)\right\}$$

où M correspond à l'indice du début de la fenêtre temporelle et P à la fin de la fenêtre. M est supérieur ou égal à 1 et P inférieur ou égal à 2N.

Le procédé de l'invention peut être également mis en oeuvre en limitant le calcul de l'échantillon de décision aux seuls échantillons significatifs. A cet usage, on peut utiliser un seuil sur l'amplitude des échantillons reçus. Ce seuil peut être ajusté à partir du signal de contrôle automatique de gain, lequel permet de maintenir la puissance du signal démodulé à un niveau constant. On trouve ce dispositif dans tous les émetteurs/récepteurs pour transmission sur voie radioélectrique, et il est également nécessaire au bon fonctionnement d'un récepteur AMRC. La démodulation intégrale n'est alors appliquée qu'aux seuls échantillons dont l'amplitude dépasse le seuil. Cette façon de procéder permet d'éliminer un certain nombre d'échantillons de bruit.

Dans une variante particulière, on utilise, pour valider les échantillons, non pas leurs amplitudes instantanées mais leurs amplitudes moyennes, calculées sur K bits, ainsi qu'un seuil adapté à ce traitement particulier.

Dans la détection du bit de rang k, on propose donc d'utiliser, comme signal de contrôle, les quantités

$$A(k,i) = \left[\frac{1}{K}\left|\sum_{l=0}^{K-1} Z^2(k-1,i)\right|\right]^{1/2}.$$

En effet, afin d'éliminer la modulation due aux bits d'information, il faut travailler sur les amplitudes au carré. Ces quantités constituent de bons indicateurs de l'existence des trajets. Leur utilisation apporte une amélioration certaine par rapport à un signal de contrôle plus classique comme l'amplitude instantanée. Le seuil S(k) à utiliser à l'instant k est proportionnel à la valeur maximale

$$\mathbf{M(k)} = \max_{i} A(k,i).$$

On a S(k)=mM(k) avec m inférieur à 1. On peut alors pondérer les échantillons par un facteur de pondération P(k,i) qui est fonction de la quantité A(k,i).

La connaissance de l'amplitude des trajets peut être utilisée dans la quantité à calculer pour prendre la décision. C'est ainsi qu'on améliore les performances avec les deux quantités :

$$\text{Réelle}\left\{\sum_{i=M}^{i=P} A(k,i).Z(k,i).Z^*(k-1,i)\right\},$$

$$\text{Réelle}\left\{\sum_{i=M}^{i=P} A^2(k,1).Z(k,i).Z^*(k-1,i)\right\}.$$

De façon précise, la présente invention a donc pour objet un procédé de démodulation différentielle numérique pour signal obtenu par modulation différentielle à étalement de spectre, ce signal ayant été obtenu à partir d'une information formée d'une suite de symboles a(k) ayant une certaine durée (Ts), chaque symbole a(k) ayant été multiplié par une séquence d'étalement de même durée (Ts) et constituée de N éléments binaires ayant chacun une durée (Tc) qui est N fois plus faible que la durée des symboles (Tc=Ts/N), ce procédé de démodulation différentielle numérique étant caractérisé par le fait qu'il comprend les opérations suivantes :

a) on suréchantillonne le signal reçu toutes les Tc/2 secondes pour obtenir 2N échantillons numériques complexes pour chaque période Ts du signal, ces 2N échantillons étant notés Z(k,i) où l'indice k est le rang du symbole de période Ts et i le rang de l'échantillon dans la période Ts, l'indice i allant de 1 à 2N,

b) pour chaque échantillon courant Z(k,i), on considère l'échantillon de même indice i mais situé dans le symbole précédent de rang k-1, soit Z(k-1,i), et l'on forme le complexe conjugué de cet échantillon précédent soit Z*(k-1,i),

c) on forme le produit de l'échantillon courant par l'échantillon précédent conjugué, soit Z(k,i).Z*(k-1,i),

d) on forme la somme éventuellement pondérée par des coefficients de pondération P(k,i) de ces produits sur une partie au moins de la période Ts, c'est-à-dire pour le rang i allant d'un entier M supérieur ou égal à 1 jusqu'à un entier P inférieur ou égal à 2N,

e) on prend la partie réelle U(k,i) de cette somme, ce qui donne un échantillon de décision permettant de restituer l'information correspondant au symbole de rang k.

**Brève description des dessins**

• la figure 1, déjà décrite, est un schéma de principe de la technique à accès multiple à répartition par les codes ;

• la figure 2, déjà décrite, montre quelques signaux illustrant le principe de cette technique ;

• la figure 3, déjà décrite, montre la réponse impulsionnelle d'un canal radiomobile ;

• la figure 4 montre la sortie du filtre adapté à la séquence d'étalement dans le cas d'un canal radiomobile multitrajet ;

• la figure 5 est un schéma synoptique d'un récepteur mettant en oeuvre le procédé de démodulation différentielle intégrale numérique selon l'invention ;

• la figure 6 est un schéma synoptique proprement dit ;

• la figure 7 montre les performances de la démodulation différentielle intégrale numérique sur un canal à six trajets.

**Exposé détaillé de modes de réalisation**

La figure 4 montre la réponse impulsionnelle du canal radiomobile telle qu'elle apparaît en sortie du filtre adapté à la séquence d'étalement (c'est-à-dire à la sortie du filtre 36 dans le schéma de la figure 1). Ces réponses ont une largeur à la base des pics égale à 2Tc mais ces pics sont étroits et, en prenant un seul échantillon tous les Tc secondes, on peut très bien ne pas échantillonner correctement le signal. Selon une première caractéristique de l'invention, les échantillons sont donc pris au rythme de deux par chip. Cette cadence correspond à un suréchantillonnage du signal et permet de ne pas manquer un trajet. L'avantage de ce suréchantillonnage est qu'il ne demande pas de localisation parfaite de chaque trajet comme c'est le cas dans les récepteurs en râteau classique.

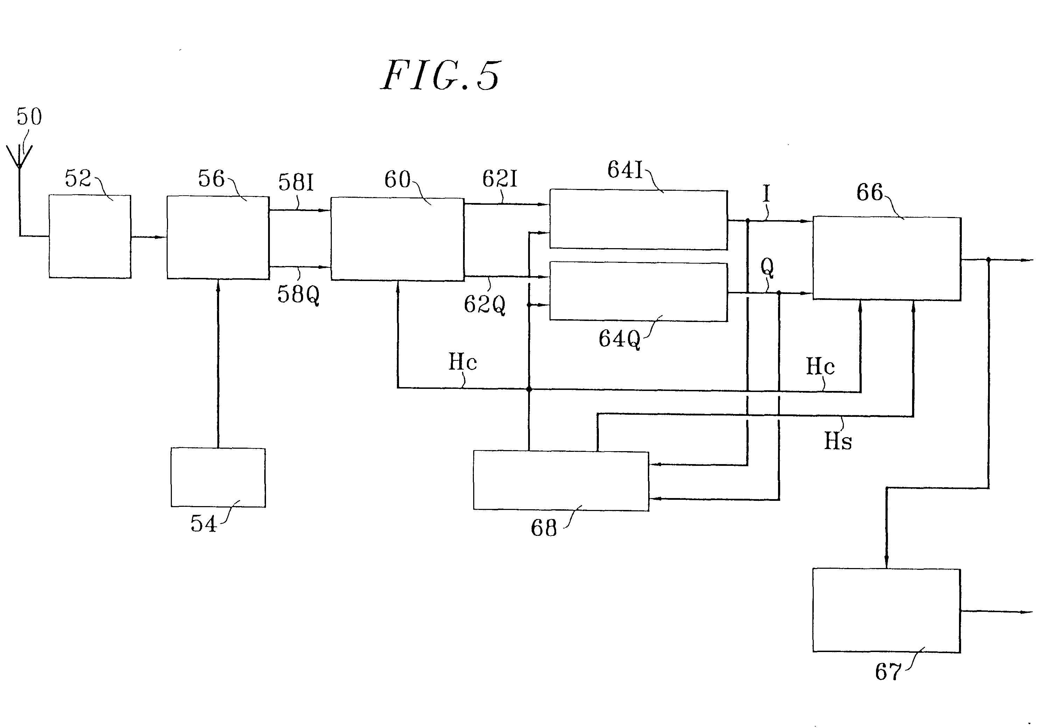

Cette particularité de suréchantillonnage ne modifie pas naturellement le processus d'émission, mais suppose que le récepteur soit modifié pour le mettre en oeuvre et soit complété par un circuit de calcul des sommes de produits précédemment définis. Un tel récepteur est représenté schématiquement sur la figure 5.

Il comprend d'abord une antenne de réception 50, un étage de réception radiofréquence 52, un oscillateur local 54 à la fréquence RF ou à une fréquence intermédiaire et un circuit 56 de transposition en bande de base, lequel est relié au circuit 52 et à l'oscillateur local 54. Le circuit 56 délivre deux signaux analogiques, traditionnellement repérés par des lettres I et Q, qui sont les signaux représentant les parties du signal reçu respectivement en phase et en quadrature de phase avec le signal produit par l'oscillateur local 54. Ces deux signaux, en phase et en quadrature, sont délivrés sur deux connexions 58I, 58Q. Toute cette partie du récepteur est classique. Les signaux sont ensuite échantillonnés à la fréquence 2Hc et filtrés dans le circuit 60. Ce filtrage réalisé de façon numérique est adapté à la forme d'impulsion chip utilisée à l'émission dans le filtre 26 de la figure 1. Le circuit 60 délivre donc, sur deux sorties 62I et 62Q, des suites de 2N échantillons par période Ts. Ces échantillons sont ensuite l'objet d'un filtrage adapté à la séquence d'étalement utilisée à l'émission dans deux filtres 64I et 64Q, lesquels délivrent deux signaux échantillonnés qui seront notés par la suite, plus simplement, I et Q. Ces deux signaux sont appliqués à un circuit démodulateur 66 dont la sortie est reliée à un circuit de décision 67. Par ailleurs, les signaux I et Q sont adressés à un circuit de synchronisation 68, qui délivre à la fois l'horloge Hc relative aux chips, qui permet l'échantillonnage dans le circuit 60 et le traitement dans le démodulateur 66, et l'horloge Hs relative aux symboles d'information.

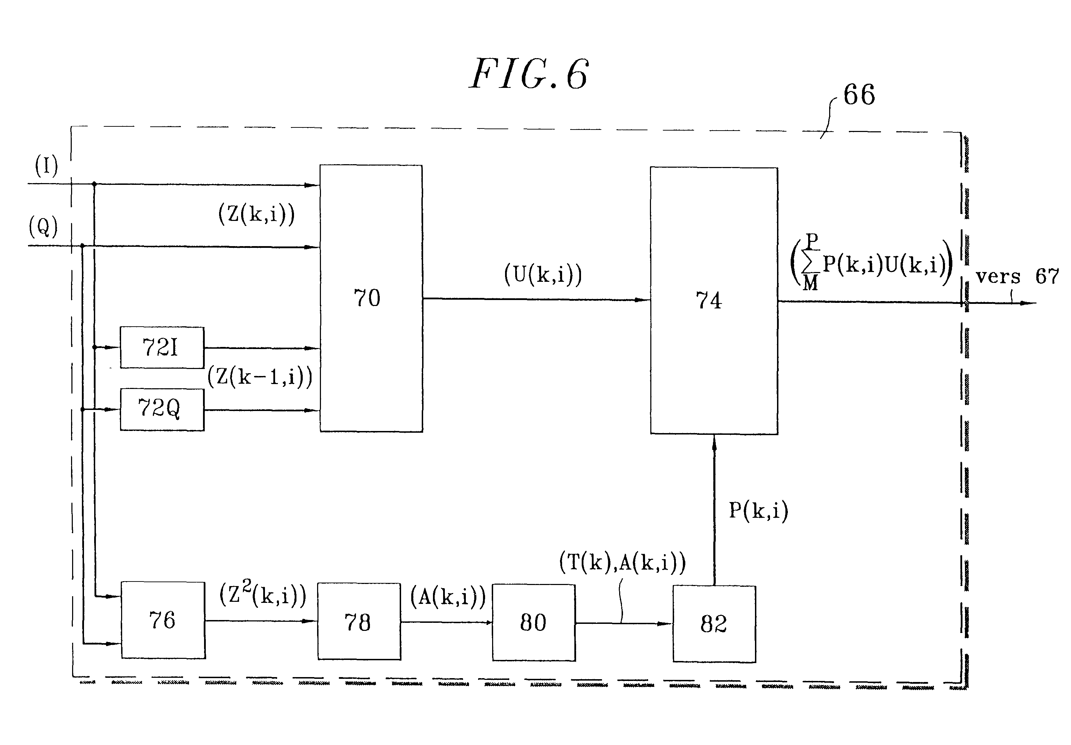

La figure 6 montre l'architecture du démodulateur 66, qui permet de calculer les quantités précédemment définies. Ce démodulateur comprend tout d'abord un circuit 70 de calcul de produits de la forme $Z(k,i).Z^*(k-1,i)$ où $Z(k,i)$ est un échantillon complexe de rangs k et i et $Z^*(k-1,i)$ l'échantillon complexe conjugué de rang précédent dans l'ordre k des séquences mais de même rang i au sein d'une séquence. Pour effectuer ce type de produit, le circuit 70 reçoit directement les échantillons I et Q de rangs k et i, ce qui correspond à $Z(k,i)$, et les échantillons $I(k-1,i)$ et $Q(k-1,i)$ retardés de la durée Ts, c'est-à-dire retardés de 2N échantillons. Ces échantillons retardés sont délivrés par deux circuits à retard 72I, 72Q.

Le circuit 70 ayant formé le produit $Z(k,i).Z^*(k-1,i)$, il en prend la partie réelle, soit $U(k,i)$. Un circuit 74 reçoit ce signal et forme une somme pondéré à l'aide de coefficients de pondération $P(k,i)$ et cela dans une fenêtre allant du rang M au rang P soit :

$$\sum_{M}^{P} P(k,i).U(k,i)$$

Cette somme constitue l'échantillon de prise de décision qui sera dirigée vers le circuit de prise de décision.

Le circuit représenté comprend en outre un circuit 76 qui reçoit I et Q et calcule le carré de Z(k,i). Il comprend encore pris par un circuit 78 qui calcule une quantité A(k,i) qui est une moyenne définie par :

$$A(k,i) = \left[ \frac{1}{K} \left| \sum_{j=0}^{j=K-1} Z^2(k-j,i) \right| \right]^{1/2} .$$

Un circuit 80 détermine la valeur maximale prise par A(k,i) quand le rang i varie, soit S(k)=MaxA(k,i). Le circuit 80 prend une fraction sS(k) de cette valeur, ce qui constitue un seuil T(k).

Un circuit 82 calcule ensuite des coefficients de pondération P(k,i) de la manière suivante :

- si la moyenne A(k,i) est inférieure au seuil T(k), le coefficient de pondération P(k,i) est pris égal à 0 ; autrement dit, les échantillons qui n'ont pas franchi le seuil ne sont pas pris en compte ;

- si la moyenne A(k,i) est supérieure ou égale au seuil T(k), alors le coefficient de pondération est pris égal à 1 (c'est-à-dire qu'en fait il n'y a pas de pondération) ou est pris égal à A(k,i), ou à $A^2(k,i)$.

La figure 7 illustre les performances du procédé de l'invention. Cette figure représente la probabilité d'erreur en fonction du niveau du signal exprimé en décibels, pour plusieurs débits chips. Les courbes représentées correspondent au canal GSM-TU à six trajets sauf la courbe 60 qui représente un canal de RAYLEIGH. Les courbes 61, 62, 63 sont les courbes obtenues avec des débits chips respectivement de 1, 2 et 4 Mchips/s. La courbe 64 est la courbe idéale correspondant à un récepteur en râteau à six branches, comprenant six démodulateurs à corrélation en parallèle, parfaitement synchronisés. Cette courbe de référence suppose des séquences d'étalement idéales (auto-orthogonales) et ne saurait donc être atteinte dans un système de type Qualcomm. Elle ne dépend pas du débit chips mais suppose implicitement que ce débit est suffisamment élevé pour que les différents trajets puissent être séparés (de l'ordre de 4 à 5 Mchips/s).

La figure 7 fait apparaître clairement l'influence du débit chips sur les performances du démodulateur différentiel intégral numérique. Comme il vient d'être expliqué, il faut que les impulsions chips soient d'une durée de l'ordre du plus petit délai séparant deux trajets successifs pour que le démodulateur puisse recombiner les trajets.

La figure 7 montre surtout que le démodulateur différentiel intégral numérique fournit des performances très proches de l'idéal. Le décalage résiduel peut être expliqué par le bruit d'autocorrélation, dans la mesure où les séquences utilisées ne sont pas auto-orthogonales mais simplement pseudo-aléatoires, comme dans le système Qualcomm.

## REFERENCES

[1] A. Salmasi, K.S. Gilhousen, "On the System Design Aspects of Code Division Multiple Access (CDMA) Applied to Digital Cellular and Personal Communications Networks", 41st IEEE Vehicular Technology Conference, May 1991, pp. 57-62.

[2] W.C. Jakes Jr., "Microwave Mobile Communication", John Wiley, 1974.

[3] G.L. Turin, "Introduction to Spread Spectrum Antimultipath Techniques and their Applications to Urban Digital Radio", Proceedings of the IEEE, vol. 68, n°3, March 1980, pp. 328-353.

[4] H. Hashemi, "The Indoor Propagation Channel", Proceedings of the IEEE, vol. 81, July 1993, pp. 943-968.

[5] J.C. Bic, D. Duponteil, J.C. Imbeaux, "Eléments de Communications Numériques", Collection Technique et Scientifique des Télécommunications, Dunod, 1986.

[6] M.K. Simon, J.K. Omura, R.A. Scholtz, B.K. Levitt, "Spread Spectrum Communications", Computer Science Press, 1985.

[7] M. Kaverhad, G.E. Bodeep, "Design and Experimental Results for a Direct-Sequence Spread Spectrum Radio Using Differential Phase-Shift-Keying Modulation for Indoor Wireless Communications", IEEE Journal on Selected Areas in Communications, vol. SAC-5, N°5, June 1987.

[8] ETSI, "European Digital Cellular Telecommunications System (Phase 2) ; Radio Transmission and Reception, (GSM 05.05)", 1994.

**Revendications**

1. Procédé de démodulation différentielle numérique pour signal obtenu par modulation différentielle à étalement de spectre, ce signal ayant été obtenu à partir d'une information formée d'une suite de symboles (a(k)) ayant une certaine durée Ts, chaque symbole (a(k)) ayant été multiplié par une séquence d'étalement de même durée Ts et constituée de N éléments binaires ayant chacun une durée Tc N fois plus faible que la durée des symboles (Tc=Ts/N), ce procédé de démodulation différentielle numérique étant **caractérisé par le fait qu'**il comprend les opérations suivantes :

   a) on suréchantillonne le signal reçu toutes les Tc/2 secondes pour obtenir 2N échantillons numériques complexes pour chaque période Ts du signal, ces 2N échantillons étant notés Z(k,i) où l'indice k est le rang du symbole de période Ts et i le rang de l'échantillon dans la période Ts, l'indice i allant de 1 à 2N,
   b) pour chaque échantillon courant Z(k,i), on considère l'échantillon de même indice i mais situé dans le symbole précédent de rang k-1, soit Z(k-1,i), et l'on forme le complexe conjugué de cet échantillon précédent soit Z*(k-1,i),
   c) on forme le produit de l'échantillon courant par l'échantillon précédent conjugué, soit Z(k,i).Z*(k-1,i),
   d) on forme la somme, éventuellement pondérée par des coefficients de pondération P(k, i) de ces produits sur une partie au moins de la période Ts, c'est-à-dire pour le rang i allant d'un entier M supérieur ou égal à 1 jusqu'à un entier P inférieur ou égal à 2N,
   e) on prend la partie réelle U(k,i) de cette somme, ce qui donne un échantillon de décision permettant de restituer l'information correspondant au symbole de rang k.

2. Procédé selon la revendication 1, **caractérisé par le fait que** l'on somme les produits sur la totalité de la période Ts d'un symbole, l'indice i prenant donc toutes les valeurs comprises entre M=1 et P=2N.

3. Procédé selon la revendication 1, **caractérisé par le fait que** l'on calcule le carré de l'amplitude des échantillons, soit $Z^2(k-j, i)$, on considère K valeurs successives de ce carré pour les K valeurs de l'indice k-j avec j allant de 0 à K-1, on calcule la somme de ces K valeurs, on divise la valeur absolue de cette somme par K, on prend la racine carrée du résultat obtenu, ce qui donne une certaine quantité moyenne A(k, i), on détermine la valeur maximale (S(k)) atteinte par cette quantité A(k, i) et l'on prend une fraction (sS(k)) de cette valeur maximale, ce qui constitue un seuil T(k).

4. Procédé selon la revendication 3, **caractérisé par le fait que**, dans l'opération d), on pondère les produits par un coefficient de pondération nul lorsque la quantité moyenne A(k, i) est inférieure au seuil T(k).

5. Procédé selon la revendication 3, **caractérisé par le fait que**, dans l'opération d), on pondère les produits par un coefficient de pondération P(k, i) égal à la quantité moyenne A(k, i) lorsque la quantité moyenne A(k, i) est supérieure au seuil T(k).

6. Procédé selon la revendication 3, **caractérisé par le fait que**, dans l'opération d), on pondère les produits par un coefficient de pondération P(k, i) égal au carré de la quantité moyenne A(k, i), lorsque cette quantité moyenne A(k, i) est supérieure au seuil T(k).

**Claims**

1. A method of digital differential demodulation for a signal obtained by differential modulation with spectrum spread, this signal having been obtained from an item of information formed from a suite of symbols (a(k)) having a certain duration Ts, each symbol (a(k)) having been multiplied by a spread sequence of the same duration Ts and made up of N binary elements each having a duration Tc N times less than the duration of the symbols (Tc-Ts/N), this method of digital differential demodulation being **characterized by** the fact that it includes the following operations:

   a) the received signal is oversampled every Tc/2 seconds to obtain 2N complex digital samples for each period Ts of the signal, these 2N samples being marked Z(k,i) where the index k is the row of the symbol of period Ts and i the row of the sample in the period Ts, the index i going from 1 to 2N,
   b) for each current sample Z(k,i), one considers the sample with the same index i but situated in the preceding symbol in row k-1, or Z(k-1,i), and one forms the conjugated complex of this preceding sample or z*(k-1,i),
   c) one forms the product of the current sample and the conjugated preceding sample, or Z(k,i).Z*(k-1,i),
   d) one forms the sum, possibly weighted by weighting coefficients P(k,i) of these products on one part at least of the period Ts, that is to say, for the row i going from a whole number M greater or equal to 1 to a whole number P less than or equal to 2N,
   e) one takes the real part U(k,i) of this sum, which gives a decision sample that allows the reconstruction of the information item corresponding to the symbol in row k.

2. A method according to claim 1, **characterized by** the fact that, one sums the products over the totality of the period Ts of a symbol, the index i therefore taking all the values between M=1 and P=2N.

3. A method according to claim 1, **characterized by** the fact that, one calculates the square of the amplitude of the samples or $Z^2$ (k-j,i), one considers K successive values of this square for the K values of the index k-j with j going from 0 to K-1, one calculates the sum of these K values, one divides the absolute value of this sum by K, one takes the square root of the result obtained, which gives a certain mean quantity A(k,i), one determines the maximum value (S(k)) reached by this quantity A(k,i) and one takes a fraction (sS(k)) of this maximum value, which constitutes a threshold T(k).

4. A method according to claim 3, **characterized by** the fact that, in the operation d), one weights the products with a weighting coefficient zero when the mean quantity A(k,i) is less than the threshold T(k).

5. A method according to claim 3, **characterized by** the fact that, in the operation d), one weights the products with a weighting coefficient P(k,i) equal to the mean quantity A(k,i) when the mean quantity A(k,i) is greater than the threshold T(k).

6. A method according to claim 3, **characterized by** the fact that, in the operation d), one weights the products with a weighting coefficient P(k,i) equal to the square of the mean quantity A(k,i) when this mean quantity A(k,i) is greater than the threshold T(k).


**Patentansprüche**

1. Verfahren zur digitalen Differentialdemodulation für ein Signal, das durch Differentialmodulation mit Spektrendehnung erhalten worden ist, wobei dieses Signal ausgehend von einer Information erhalten worden ist, die durch eine Folge von Symbolen (a(k)) mit einer bestimmten Dauer Ts gebildet ist, wobei jedes Symbol (a(k)) mit einer Dehnungsfolge gleicher Dauer Ts multipliziert worden ist, die durch N binäre Elemente gebildet ist, weiche jeweils eine Dauer Tc haben, die N mal kleiner als die Dauer der Symbole ist (Tc=Ts/N), wobei dieses Verfahren zur digitalen Differentialdemodulation **dadurch gekennzeichnet ist, dass** es die folgenden Schritte umfasst:

   a) man führt eine Überabtastung des empfangenen Signals alle Tc/2 Sekunden durch, um 2N komplexe digitale Abtastwerte für jede Periode Ts des Signals zu erhalten, wobei diese 2N Abtastwerte als Z (k,i) bezeichnet werden, wobei der Index k der Rang des Symbols der Periode Ts und i der Rang des Abtastwerts in der Periode Ts ist, wobei der Index i von 1 bis 2N läuft,
   b) für jeden momentanen Abtastwert Z (k,i) betrachtet man den Abtastwert mit gleichem Index i, jedoch im vorhergehenden Symbol mit Rang k-1 gelegen, d.h. Z (k-1,i), und man bildet die komplex Konjugierte dieses vorhergehenden Abtastwerts, d.h. Z* (k-1,i),

c) man bildet das Produkt des momentanen Abtastwerts mit dem konjugierten vorhergehenden Abtastwert, d.h. Z (k,i) · Z* (k-1,i),
d) man bildet die Summe, eventuell gewichtet mit Gewichtungskoeffizienten P (k,i) dieser Produkte über wenigstens einen Teil der Periode Ts, d.h. für den Rang i, der von einer ganzen Zahl M größer oder gleich 1 bis zu einer ganzen Zahl P kleiner oder gleich 2N läuft,
e) man nimmt den Realteil U (k,i) dieser Summe, was einen Entscheidungsabtastwert ergibt, der die Wiederherstellung der Information entsprechend dem Symbol mit Rang k ermöglicht.

2. Verfahren nach Anspruch 1, **dadurch gekennzeichnet, dass** man die Produkte über die gesamte Periode Ts eines Symbols summiert, wobei der Index i somit alle Werte annimmt, die zwischen M=1 und P=2N enthalten sind.

3. Verfahren nach Anspruch 1, **dadurch gekennzeichnet, dass** man das Quadrat der Amplitude der Abtastwerte berechnet, d.h. $Z^2$ (k-j,i), dass man K aufeinanderfolgende Werte dieses Quadrats für die K Werte des Index k-j mit j von 0 bis K-1 laufend betrachtet, dass man die Summe dieser K Werte berechnet, dass man den Absolutwert dieser Summe durch K dividiert, dass man die Quadratwurzel des erhaltenen Ergebnisses nimmt, was eine bestimmte mittlere Größe A (k,i) ergibt, dass man den von dieser Größe A (k,i) erreichten Maximalwert (S(k)) bestimmt, und dass man einen Bruchteil (sS(k)) dieses Maximalwerts nimmt, was eine Schwelle T (k) bildet.

4. Verfahren nach Anspruch 3, **dadurch gekennzeichnet, dass** man im Schritt d) die Produkte mit einem Gewichtungskoeffizienten 0 gewichtet, wenn die mittlere Größe A (k,i) kleiner als die Schwelle T (k) ist.

5. Verfahren nach Anspruch 3, **dadurch gekennzeichnet, dass** man im Schritt d) die Produkte mit einem Gewichtungskoeffizienten P (k,i) gleich der mittleren Größe A (k,i) gewichtet, wenn die mittlere Größe A (k,i) größer als die Schwelle T (k) ist.

6. Verfahren nach Anspruch 3, **dadurch gekennzeichnet, dass** man im Schritt d) die Produkte mit einem Gewichtungskoeffizienten P (k,i) gleich dem Quadrat der mittleren Größe A (k,i) gewichtet, wenn diese mittlere Größe A (k,i) größer als die Schwelle T (k) ist.

# FIG.1

# FIG.2

Ts

information binaire   +1   −1   −1   +1   −1   (a)

séquence d'étalement S   110100   (b)

Tc = Ts/N

signal émis   +S   −S   −S   +S   −S   (c)

signal de corrélation   Pic   Pic   Pic   Pic   (d)

information binaire restituée   +1   −1   −1   +1   −1   (e)

## *FIG.3*

## *FIG.4*

# FIG.5

EP 0 820 157 B1

FIG.6

FIG.6

## FIG.7